# EUROPEAN PATENT APPLICATION

(11) **EP 4 769 737 A1**
(43) Date of publication of application: **01.07.2026**
(21) Application number: 25745471.0
(22) Date of filing: 20.01.2025
(51) Int. Cl.: H01M 50/282, H01M 50/204, H01M 10/658

(54) **BATTERY CELL ASSEMBLY AND BATTERY PACK**

(30) Priority: 23.01.2024 KR 20240010483; 05.03.2024 KR 20240031042
(71) Applicant: LG Energy Solution, Ltd., Seoul 07335 (KR)
(72) Inventor: LIM, Chae Won, Daejeon 34122 (KR); LEE, Jae Hyun, Daejeon 34122 (KR)
(74) Representative: Hoffmann Eitle
(86) International application number: PCT/KR2025/001040
(87) International publication number: WO 2025/159454

(57) **Abstract**

According to exemplary embodiments of the present invention for solving the described problem, a battery cell assembly is provided. The battery cell assembly comprises: a plurality of battery cells arranged in a first direction; and a refractory structure disposed on the plurality of battery cells, wherein the refractory structure is in contact with each of the plurality of battery cells and is structurally corrugated.

## Description

### Technical Field

The present disclosure relates to a battery cell assembly and a battery pack. The present application claims the benefit of priority based on Korean Patent Application No. 10-2024-0010483, filed on January 23, 2024 and Korean Patent Application No. 10-2024-0031042, filed on March 5, 2024, and the entire contents of the Korean patent applications are incorporated herein by reference.

### Background Art

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### Disclosure

### Technical Problem

The present disclosure is directed to providing a battery cell assembly with improved safety and a battery pack.

### Technical Solution

Embodiments of the present disclosure provide a battery cell assembly. The battery cell assembly includes a plurality of battery cells arranged in a first direction and a fireproof structure on the plurality of battery cells, and the fireproof structure is in contact with each of the plurality of battery cells and has a corrugated structure.

The corrugated structure may include a first wrinkle and a second wrinkle that are arranged in a first direction, and the first wrinkle and the second wrinkle may be different from each other in shape.

The first wrinkle may include a first slope inclined in the first direction and a second slope inclined in the first direction, and the second wrinkle may include a third slope inclined in the first direction and a fourth slope inclined in the first direction.

A first gradient of the first slope may be different from a second gradient of the second slope.

The first gradient may be less than the second gradient.

A third gradient of the third slope may be different from a fourth gradient of the fourth slope.

The third gradient may be less than the fourth gradient.

The third gradient may be equal to the first gradient of the first slope.

The fourth gradient may be equal to the second gradient of the second slope.

The fireproof structure may include multiple layers.

The fireproof structure may include first to third layers, and the first layer may be a fire-resistant adhesive tape, the second layer may include a fire-resistant sheet, and the third layer may include a fire-resistant coating.

The second layer may include one of propylene oxide (PO), polyurethane (PU), aramid film, non-combustible glass (NCG) fiber sheet, and modified polyphenylene oxide (mPPO).

The third layer may include ceramic.

A thickness of the third layer may be greater than a thickness of the first layer.

The thickness of the third layer may be greater than a thickness of the second layer.

The thickness of the third layer may be 25 µm or more, and the thickness of the third layer may be 30 µm or less.

The sum of thicknesses of the first to third layers may be 40 µm or more, and the sum of thicknesses of the first to third layers may be 50 µm or less.

### Advantageous Effects

According to embodiments of the present disclosure, a battery cell assembly may include a fireproof cover. The fireproof cover may have a corrugated structure and thus the yield and throughput of an assembly process of the battery cell assembly may improve.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### Brief Description of the Drawings

FIG. 1 is a perspective view for describing a battery cell assembly according to embodiments.
FIG. 2 is a cross-sectional view taken along line 1I-1I' of FIG. 1.
FIG. 3 is an enlarged partial cross-sectional view of a part of FIG. 2.
FIG. 4 is a cross-sectional view of a battery cell.
FIG. 5 is an exploded perspective view of a battery cell.
FIG. 6 is a cross-sectional view of a fireproof structure.
FIG. 7 is a cross-sectional view taken along line 6I-6I' of FIG. 6.
FIG. 8 is a flowchart of a method of manufacturing a secondary battery according to embodiments.
FIGS. 9 to 13 are flowcharts of a method of manufacturing a secondary battery according to embodiments.
FIGS. 14 and 15 are cross-sectional views for describing a fireproof structure according to other embodiments.
FIG. 16 is a plan view of a battery pack according to embodiments.

### Best Mode

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

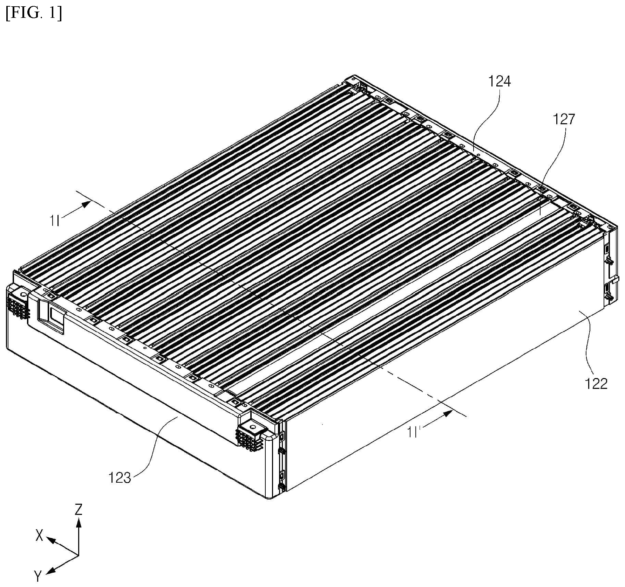

FIG. 1 is a perspective view for describing a battery cell assembly 120 according to embodiments.

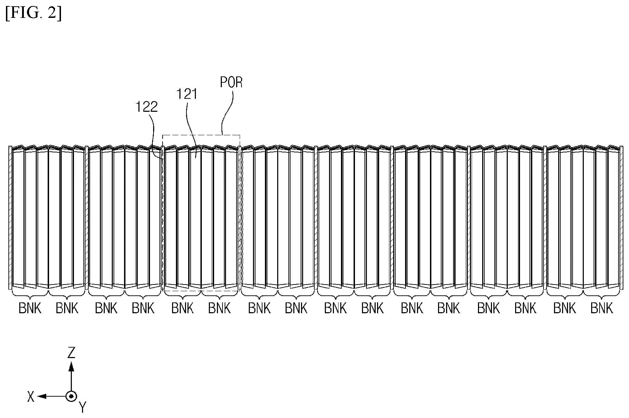

FIG. 2 is a cross-sectional view taken along line 1I-1I' of FIG. 1.

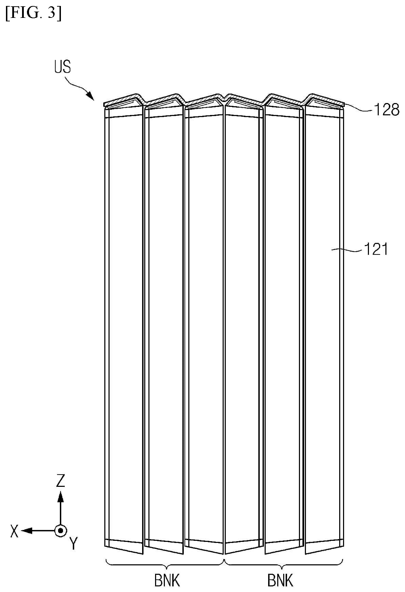

FIG. 3 is an enlarged partial cross-sectional view of a part POR of FIG. 2.

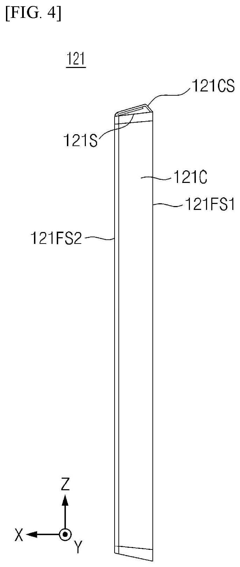

FIG. 4 is a cross-sectional view of a battery cell 121.

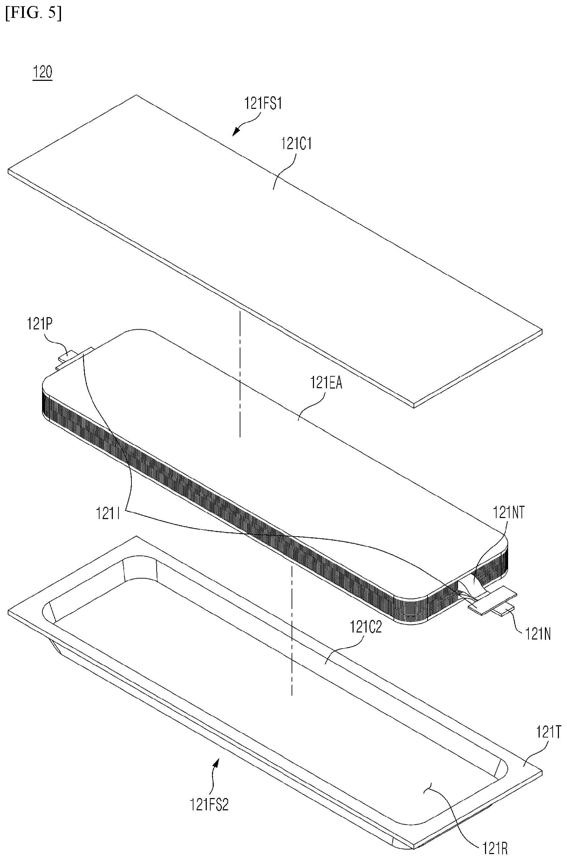

FIG. 5 is an exploded perspective view of the battery cell 121.

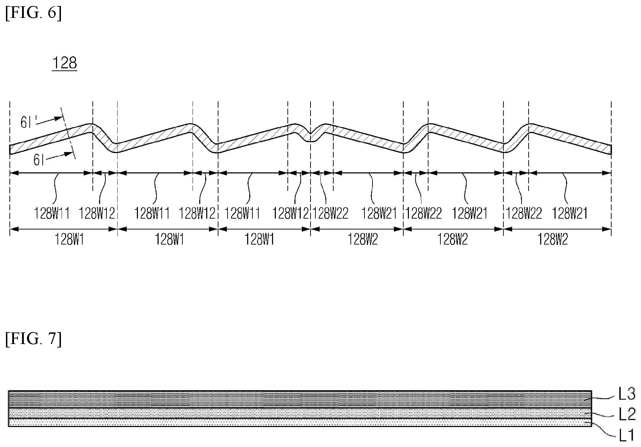

FIG. 6 is a cross-sectional view of a fireproof structure 128.

FIG. 7 is a cross-sectional view taken along line 6I-6I' of FIG. 6.

Referring to FIGS. 1 to 3, the battery cell assembly 120 may include a plurality of battery cells 121, pads 122, a first integrated circuit assembly 123, a second integrated circuit assembly 124, a flexible flat cable (FFC) assembly 127, and the fireproof structure 128.

Referring to FIGS. 4 and 5, the battery cell 121 may include a cell case 121C, an electrode assembly 121EA, a positive terminal 121P, and a negative terminal 121N. The battery cell 121 may further include an electrolyte.

According to embodiments, the battery cell 121 may include a cylindrical battery cell, a prismatic battery cell, or a pouch type battery cell. An electrode assembly of the cylindrical battery cell is embedded in the cylindrical metal can. An electrode assembly of the prismatic battery cell is embedded in the prismatic metal can. An electrode assembly of the pouch type battery cell is embedded in a pouch case including an aluminum laminate sheet. Hereinafter, the technical idea of the present disclosure will be described with respect to a pouch type battery cell as an example of the battery cell 121 but those of ordinary skill in the art will be able to easily derive an example in which the battery cell 121is a cylindrical battery cell or an prismatic battery cell based on the description herein.

The electrode assembly 121EA may include a positive electrode, a negative electrode, and a separator between the positive electrode and the negative electrode. The electrode assembly 121EA may be of a jelly-roll type or stack type. The electrode assembly 121EA that is of the jelly-roll type may include a structure in which a positive electrode, a negative electrode, and a separator between the positive and negative electrodes are wound together. The electrode assembly 121EA that is of the stack type may include a plurality of positive electrodes and a plurality of negative electrodes that are sequentially stacked, and a plurality of separators therebetween.

Each of the plurality of positive electrodes of the electrode assembly 121EA may include a positive electrode tab (not shown). The positive electrode tab of each of the plurality of positive electrodes of the electrode assembly 121EA may be short-circuited from the positive terminal 121P. The positive electrode tab of each of the plurality of positive electrodes of the electrode assembly 121EA may be welded to the positive terminal 121P.

Each of the plurality of negative electrodes of the electrode assembly 121EA may include a negative electrode tab 121NT. The negative electrode tab 121NT of each of the plurality of negative electrodes of the electrode assembly 121EA may be short-circuited from the negative terminal 121N. The negative electrode tab 121NT of each of the plurality of negative electrodes of the electrode assembly 121EA may be welded to the negative terminal 121N.

The cell case 121C may include an inner resin layer, a metal layer, and an outer resin layer. An adhesive and an anti-corrosion layer may be further provided between the inner resin layer and the metal layer and between the outer resin layer and the metal layer.

The inner resin layer may have thermal adhesion and be referred to as a sealant layer. The inner resin layer allows sealing of the cell case 121C. The inner resin layer may include, for example, a polyolefin-based resin such as polypropylene (PP) and polyethylene (PE). The metal layer may include an alloy of iron, carbon, chromium and manganese, an alloy of iron, chromium and nickel, or aluminum. The metal layer may be a gas barrier. The metal layer may block the entry and exit of a gas from the cell case 121C. The outer resin layer may be a surface protective layer. The outer resin layer may include a material having wear resistance and heat resistance, such as a nylon resin.

The cell case 121C may be provided by bonding a first cell case 121C1 and a second cell case 121C2. The first cell case 121C1 may be substantially flat. The first cell case 121C1 may not include a receiving part. The second cell case 121C2 may include a receiving part 121R. The receiving part 121R may be formed by a pouch forming process. The receiving part 121R is a part of the second cell case 121C2 that is molded in the form of bowl to accommodate the electrode assembly 121EA therein.

A terrace 121T of the second cell case 121C2 may surround the receiving part 121R. The terrace 121T of the second cell case 121C2 may be bonded to an edge of the first cell case 121C1 to form the cell case 121C. A sealing part 121CS may be provided by bonding the first and second cases 121C1 and 121C2. That is, the sealing part 121CS may be a bonding part of the first and second cases 121C1 and 121C2.

As illustrated in FIG. 2, when a receiving part is formed in only the second cell case 121C2 among the first and second cases 121C1 and 121C2, the sealing part 121CS may be connected to a first main surface 121FS1. The sealing part 121CS may include a portion that is coplanar with the first main surface 121FS1.

The cell case 121C may have a roughly rectangular parallelepiped shape, and the first main surface 121FS1 and a second main surface 121FS2 of the cell case 121C may be widest surfaces of the cell case 121C. The first main surface 121FS1 and the second main surface 121FS2 may be substantially parallel to the electrode assembly 121EA or at least one of the plurality of positive electrodes and the plurality of negative electrodes of the electrode assembly 121EA. The first main surface 121FS1 and the second main surface 121FS2 may be opposite to each other. The first main surface 121FS1 and the second main surface 121FS2 may be substantially perpendicular to an X-axis direction but embodiments are not limited thereto.

An insulating tape 121I may be applied onto the positive terminal 121P and the negative terminal 121N. The positive terminal 121P and the negative terminal 121N may protrude to the outside of the cell case 121C. The positive terminal 121P and the negative terminal 121N may protrude from the cell case 121C in a Y-axis direction. Accordingly, a resulting voltage and current of the battery cell 121 may be output through the positive terminal 121P and the negative terminal 121N. The positive terminal 121P may be a positive lead. The negative terminal 121N may be a negative lead. The Y-axis direction may be substantially perpendicular to the X-axis direction.

Referring back to FIGS. 1 to 3, a plurality of battery cells 121 may be arranged in the X-axis direction. The plurality of battery cells 121 may be coupled to each other via, for example, an adhesive.

The plurality of battery cells 121 may form a plurality of banks BNK. For example, some of the battery cells 121 (e.g., three battery cells 121) may be connected in parallel to each other and form a bank BNK together. The plurality of banks BNK may be connected in series. A resulting connection form of the plurality of battery cells 121 may be referred to as a 3-parallel-16 serial (3P-16S) form but is only an example and should not be understood as limiting the technical idea of the present disclosure in any sense. The number of banks connected in series and the number of battery cells 121 included in the plurality of banks may be determined according to a voltage and a current to be output from the battery cell assembly 120.

In the present example, two banks BNK may form a unit stack US. Unit stacks US may alternate with the pads 122. One of the pads 122 may be provided between two of the unit stacks US and one of the unit stacks US may be provided between two of the pads 122.

Odd-numbered banks BNK are connected in series to even-numbered banks BNK and thus an orientation of the battery cells 121 of the odd-numbered banks BNK may be different from an orientation of the battery cells 121 of the even-numbered banks BNK. The orientation of the battery cells 121 of the odd-numbered banks BNK may be opposite to the orientation of the battery cells 121 of the even-numbered banks BNK. That is, an orientation of the battery cells 121 of the odd-numbered banks BNK when rotated by 180 degrees about a Z-axis may be the same as the orientation of the battery cells 121 of the even-numbered banks BNK. Accordingly, the positive terminals 121P (see FIG. 5) of the battery cells 121 of the odd-numbered banks BNK may be close to the negative terminals 121N (see FIG. 5) of the battery cells 121 of the even-numbered banks BNK, and the positive terminals 121P (see FIG. 5) of the battery cells 121 of the even-numbered banks BNK may be close to the negative terminals 121N (see FIG. 5) of the battery cells 121 of the odd-numbered banks BNK.

The pads 122 may absorb the swelling of the plurality of battery cells 121. Each of the pads 122 may include polyurethane (PU). Each of the pads 122 may include a fire-resistant material such as silicon. As a non-limiting example, two of the banks BNK may be interposed between adjacent pads 122.

The first integrated circuit assembly 123 may include an insulating frame, an integrated circuit, bus bars, sensing plates, sensing bars, temperature sensors, wires, and an insulating cover. The second integrated circuit assembly 124 may include an insulating frame, an integrated circuit, sensing plates, temperature sensors, wires, and an insulating cover.

The first and second integrated circuit assemblies 123 and 124 may provide electrical connection between the plurality of battery cells 121, output resulting voltages of the plurality of battery cells 121, and include physical and functional components for measuring voltages (or currents) of nodes inside a circuit composed of the plurality of battery cells 121.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited with positive leads 121P of one or more battery cells 121 of a first bank BNK and negative leads 121N of one or more battery cells 121 of a last bank BNK. The bus bars may be welded to the positive leads 121P of the one or more battery cells 121 of the first bank BNK and the negative leads 121N of the one or more battery cells 121 of the last bank BNK. Resulting voltages of the plurality of battery cells 121 of the battery cell assembly 120 may be output through the bus bars. The bus bars may be fixed onto the insulating frame.

The integrated circuit may be mounted on the insulating frame. The positive lead 121P and the negative leads 121N that are welded to each other may form nodes inside the battery cell assembly 120. The integrated circuit may be configured to measure voltages of the nodes through the sensing plates and the sensing bars.

The sensing bars may include a conductive material. The sensing bars may have a rod shape. The sensing bars may be short-circuited with the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited with corresponding ones of the positive leads 121P and the negative leads 121N of the plurality of battery cells 121.

Each of the sensing plates may be connected to the integrated circuit. Voltages of the nodes inside the battery cell assembly 120 may be measured through the sensing plates.

The temperature sensors may be configured to measure temperatures of a plurality of points on the battery cell assembly 120. The temperature sensors may be spatially distributed and thus a temperature distribution in the battery cell assembly 120 may be measured.

The insulating cover may include an insulating material such as plastic. The insulating cover may be interference-fitted into the insulating frame. The insulating cover may cover the integrated circuit, the bus bars, the sensing plates, the sensing bars, and the temperature sensors and thus electrical elements of the first and second integrated circuit assemblies may be protected.

The FFC assembly 127 may provide electrical connection between the integrated circuit of the first integrated circuit assembly 123 and the integrated circuit of the second integrated circuit assembly 124. Accordingly, measured values such as temperatures and voltages collected from the integrated circuit of the second integrated circuit assembly 124 may be transmitted to the integrated circuit of the first integrated circuit assembly 123 through the FFC assembly 127.

Referring to FIGS. 3, 6, and 7, the fireproof structures 128 may be on the unit stacks US. The fireproof structures 128 may cover the unit stacks US. The fireproof structures 128 may be coupled to the unit stacks US. The fireproof structures 128 may be attached to the unit stacks US. The fireproof structures 128 may correspond to the unit stacks US in a one-to-one manner.

Each of the fireproof structures 128 may include a corrugated structure. Each of the fireproof structures 128 may include first wrinkles 128W1 and second wrinkles 128W2. The first wrinkles 128W1 and the second wrinkles 128W2 may have a shape complementary to shapes of upper parts of overlapping ones among the battery cells 121 and thus the fireproof structures 128 may be easily attached to the unit stacks US.

The first and second wrinkles 128W1 and 128W2 may have different shapes. The first and second wrinkles 128W1 and 128W2 may have shapes that are inverted to each other. The first and second wrinkles 128W1 and 128W2 may be symmetrical to each other with respect to a YZ plane. The YZ plane may be substantially parallel to the Y-axis direction and a Z-axis direction and be substantially perpendicular to the X-axis direction.

The first wrinkles 128W1 of the fireproof structure 128 may be repeated in the X-axis direction. The number of repetitions of the first wrinkles 128W1 is equal to the number of battery cells 121 included in each of corresponding banks BNK. For example, in the example of FIG. 3, each of the banks BNK includes three battery cells 121 and thus the first wrinkles 128W1 may be repeated three times in the X-axis direction.

The second wrinkles 128W2 of the fireproof structure 128 may be repeated in the X-axis direction. The number of repetitions of the second wrinkles 128W2 is equal to the number of battery cells 121 included in each of corresponding banks BNK. For example, in the example of FIG. 3, each of the banks BNK includes three battery cells 121 and thus the second wrinkles 128W2 may be repeated three times in the X-axis direction.

The first wrinkle 128W1 may include a first slope 128W11 and a second slope 128W12. A length of the first slope 128W11 may be different from a length of the second slope 128W12. The length of the first slope 128W11 may be greater than the length of the second slope 128W12. The second wrinkle 128W2 may include a third slope 128W21 and a fourth slope 128W22. A length of the third slope 128W21 may be different from a length of the fourth slope 128W22. The length of the third slope 128W21 may be greater than the length of the fourth slope 128W22.

Each of the first and second slopes 128W11 and 128W12 may be oblique to an XY plane. The first slope 128W11 may have a first gradient with respect to the XY plane. The second slope 128W12 may have a second gradient with respect to the XY plane. The first gradient may be different from the second gradient. The first gradient may be less than the second gradient. The XY plane may be substantially parallel to the X-axis direction and the Y-axis direction and be substantially perpendicular to the Z-axis direction.

Each of the third and fourth slopes 128W21 and 128W22 may be oblique to the XY plane. The third slope 128W21 may have a third gradient with respect to the XY plane. The fourth slope 128W22 may have a fourth gradient with respect to the XY plane. The third gradient may be different from the fourth gradient. The third gradient may be less than the fourth gradient. The third gradient may be substantially the same as the first gradient. The fourth gradient may be substantially the same as the second gradient.

Each of the fireproof structures 128 may include a first layer L1, a second layer L2, and a third layer L3. Each of the fireproof structures 128 may have a uniform thickness. The second layer L2 may be on the first layer L1, and the third layer L3 may be on the second layer L2. The second layer L2 may be interposed between the first and third layers L1 and L3.

The first layer L1 may include an adhesive material. The first layer L1 may include a fire-resistant material. The first layer L1 may be a fire-resistant adhesive tape. According to embodiments, a melting temperature and/or an ignition point of the first layer L1 may be about 300 °C or higher. According to embodiments, the melting temperature and/or the ignition point of the first layer L1 may be about 600 °C or higher. According to embodiments, the melting temperature and/or the ignition point of the first layer L1 may be about 1000 °C or higher. According to embodiments, the melting temperature and/or the ignition point of the first layer L1 may be about 1500 °C or higher.

According to embodiments, thermal conductivity of the first layer L1 may be about 20 W/mK or less. According to embodiments, the thermal conductivity of the first layer L1 may be about 1 W/mK or less. According to embodiments, the thermal conductivity of the first layer L1 may be about 0.3 W/mK or less. The thermal conductivity of the first layer L1 described above may be measured at room temperature (about 25 °C).

The second layer L2 may include a fire-resistant material. The second layer L2 may include a fire-resistant sheet (or a fire-resistant film). The second layer L2 may include propylene oxide (PO), polyurethane (PU), aramid film, non-combustible glass (NCG) fiber sheet, or glass fiber-containing modified polyphenylene oxide (mPPO). The second layer L2 may include a material different from that of the first layer L1. The second layer L2 may be a fire-resistant sheet. That is, the second layer L2 is a core structure of the fireproof structure 128, and the first and third layers L1 and L3 may be applied with respect to the second layer L2. For example, the second layer L2 may be provided, the first layer L1 may be attached to the second layer L2, and the third layer L3 may be applied onto the second layer L2. As another example, the second layer L2 may be provided, the third layer L3 may be applied onto the second layer L2, and the first layer L1 may be attached to the second layer L2.

According to embodiments, a melting temperature and/or an ignition point of the second layer L2 may be about 300 °C or higher. According to embodiments, the melting temperature and/or the ignition point of the second layer L2 may be about 600 °C or higher. According to embodiments, the melting temperature and/or the ignition point of the second layer L2 may be about 1000 °C or higher. According to embodiments, the melting temperature and/or the ignition point of the second layer L2 may be about 1500 °C or higher.

According to embodiments, thermal conductivity of the second layer L2 may be about 20 W/mK or less. According to embodiments, the thermal conductivity of the second layer L2 may be about 1 W/mK or less. According to embodiments, the thermal conductivity of the second layer L2 may be about 0.3 W/mK or less. The thermal conductivity of the second layer L2 described above may be measured at room temperature (about 25 °C).

The third layer L3 may include a fire-resistant material. The third layer L3 may include a material different from that of the first layer L1. The third layer L3 may include a material different from that of the second layer L2. The third layer L3 may include ceramic. The third layer L3 may be provided by a spray type coating agent. The third layer L3 may be provided with a paint type coating agent. The third layer L3 may be provided using a ceramic water-soluble coating agent. The third layer L3 may be provided by spraying, painting, printing, vapor deposition, immersion, spin coating, roller coating, floating coating, curtain coating, sputtering, coextrusion, or the like.

According to embodiments, a melting temperature and/or an ignition point of the third layer L3 may be about 300 °C or higher. According to embodiments, the melting temperature and/or the ignition point of the third layer L3 may be about 600 °C or higher. According to embodiments, the melting temperature and/or the ignition point of the third layer L3 may be about 1000 °C or higher. According to embodiments, the melting temperature and/or the ignition point of the third layer L3 may be about 1500 °C or higher.

According to embodiments, thermal conductivity of the third layer L3 may be about 20 W/mK or less. According to embodiments, the thermal conductivity of the third layer L3 may be about 1 W/mK or less. According to embodiments, the thermal conductivity of the third layer L3 may be about 0.3 W/mK or less. The thermal conductivity of the third layer L3 described above may be measured at room temperature (about 25 °C).

According to embodiments, the sum of thicknesses of the first layer L1, the second layer L2, and the third layer L3 may be in a range of about 10 µm to about 200 µm. According to embodiments, the sum of the thicknesses of the first layer L1, the second layer L2, and the third layer L3 may be about 20 µm or more. According to embodiments, the sum of the thicknesses of the first layer L1, the second layer L2, and the third layer L3 may be about 30 µm or more. According to embodiments, the sum of the thicknesses of the first layer L1, the second layer L2, and the third layer L3 may be about 40 µm or more. According to embodiments, the sum of the thicknesses of the first layer L1, the second layer L2, and the third layer L3 may be about 150 µm or less. According to embodiments, the sum of the thicknesses of the first layer L1, the second layer L2, and the third layer L3 may be about 100 µm or less. According to embodiments, the sum of the thicknesses of the first layer L1, the second layer L2, and the third layer L3 may be about 90 µm or less. According to embodiments, the sum of the thicknesses of the first layer L1, the second layer L2, and the third layer L3 may be about 80 µm or less. According to embodiments, the sum of the thicknesses of the first layer L1, the second layer L2, and the third layer L3 may be about 70 µm or less. According to embodiments, the sum of the thicknesses of the first layer L1, the second layer L2, and the third layer L3 may be about 60 µm or less. According to embodiments, the sum of the thicknesses of the first layer L1, the second layer L2, and the third layer L3 may be about 50 µm or less.

According to embodiments, each of the first layer L1, the second layer L2, and the third layer L3 may have a uniform thickness. According to embodiments, the first layer L1, the second layer L2, and the third layer L3 may have different thicknesses but embodiments are not limited thereto. The first layer L1, the second layer L2, and the third layer L3 may have the same thickness.

According to embodiments, the thickness of the second layer L2 may be greater than the thickness of the first layer L1. According to embodiments, the thickness of the third layer L3 may be greater than the thickness of the first layer L1. According to embodiments, the thickness of the third layer L3 may be greater than the thickness of the second layer L2.

According to exemplary embodiments, the thickness of the first layer L1 may be in a range of about 5 µm to about 20 µm. According to embodiments, the thickness of the first layer L1 may be about 6 µm or more. According to embodiments, the thickness of the first layer L1 may be about 7 µm or more. According to embodiments, the thickness of the first layer L1 may be about 8 µm or more. According to embodiments, the thickness of the first layer L1 may be about 15 µm or less. According to embodiments, the thickness of the first layer L1 may be about 10 µm or less.

In the range of thicknesses of the first layer L1 described above, the first layer L1 may provide a sufficient adhesive force to the fireproof structure 128 and prevent an excessive increase in a thickness of the fireproof structure 128. Accordingly, a decrease in the energy density of a battery device including the battery cell 121, e.g., the battery cell assembly 120 (see FIG. 7), may be prevented.

According to embodiments, the thickness of the second layer L2 may be in a range of about 10 µm to about 50 µm. According to embodiments, the thickness of the second layer L2 may be about 11 µm or more. According to embodiments, the thickness of the second layer L2 may be about 12 µm or more. According to embodiments, the thickness of the second layer L2 may be about 45 µm or less. According to embodiments, the thickness of the second layer L2 may be about 40 µm or less. According to embodiments, the thickness of the second layer L2 may be about 35 µm or less. According to embodiments, the thickness of the second layer L2 may be about 30 µm or less. According to embodiments, the thickness of the second layer L2 may be about 25 µm or less. According to embodiments, the thickness of the second layer L2 may be about 20 µm or less. According to embodiments, the thickness of the second layer L2 may be about 15 µm or less.

In the range of thicknesses of the second layer L2, the second layer L2 may prevent an excessive increase in the thickness of the fireproof structure 128, and thus, a decrease in energy density of a battery device including the battery cell 121, e.g., the battery cell assembly 120 (see FIG. 7), may be prevented.

According to embodiments, the thickness of the third layer L3 may be in a range of about 10 µm to about 50 µm. According to embodiments, the thickness of the third layer L3 may be about 15 µm or more. According to embodiments, the thickness of the third layer L3 may be about 20 µm or more. According to embodiments, the thickness of the third layer L3 may be about 25 µm or more. According to embodiments, the thickness of the third layer L3 may be about 50 µm or less. According to embodiments, the thickness of the third layer L3 may be about 45 µm or less. According to embodiments, the thickness of the third layer L3 may be about 35 µm or less. According to embodiments, the thickness of the third layer L3 may be about 30 µm or less.

When the thickness of the third layer L3 increases, the fire-resistance performance of the fireproof structure 128 improves but the thickness of the fireproof structure 128 increases, and thus, the energy density of a battery device including the battery cell 121, e.g., the battery cell assembly 120 (see FIG. 7), decreases. That is, the thickness of the third layer L3 may be determined based on energy density and fire-resistant performance that are in a trade-off relationship. In the range of thicknesses of the third layer L3 described above, the third layer L3 may prevent an excessive increase in the thickness of the fireproof structure 128 and provide sufficient fire-resistant performance to the fireproof structure 128.

### (Second embodiment)

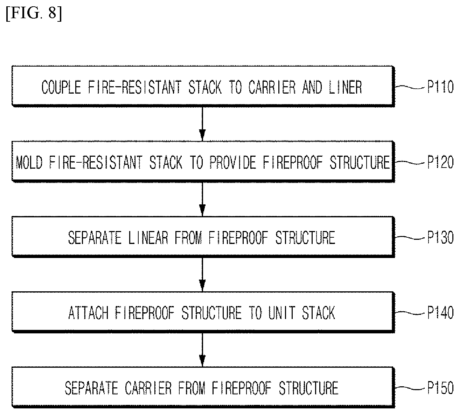

FIG. 8 is a flowchart of a method of manufacturing a secondary battery according to example embodiments.

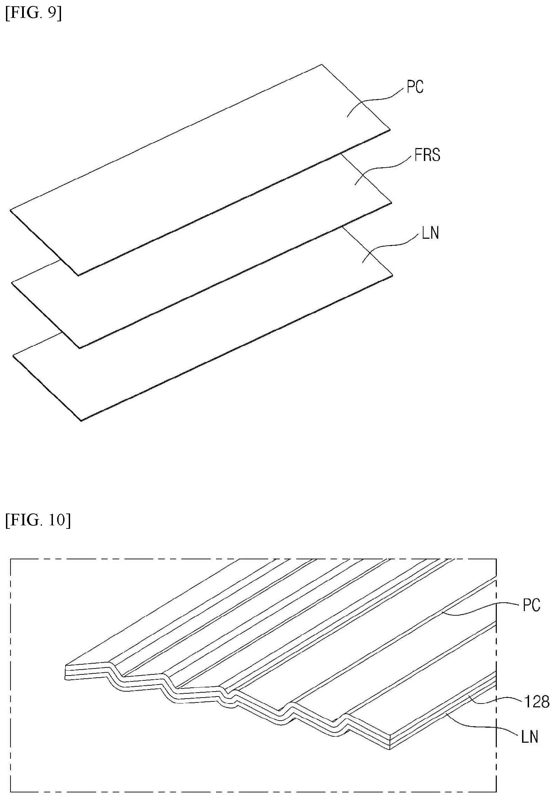

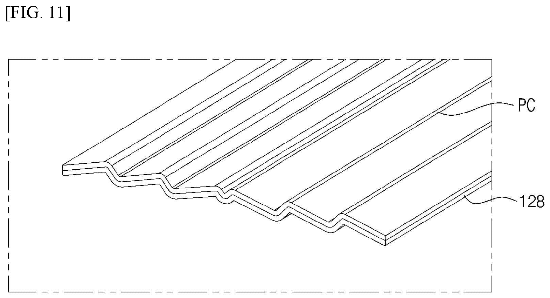

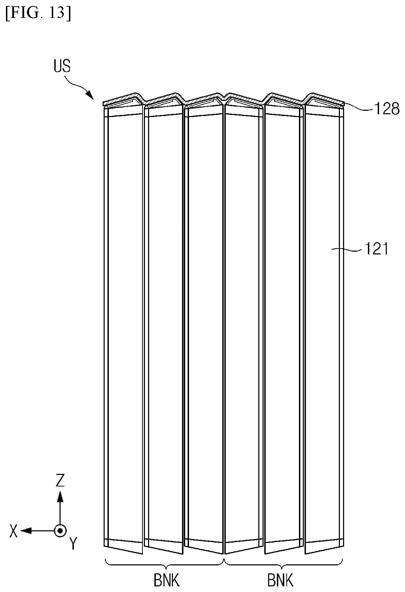

FIGS. 9 to 13 are diagrams for describing a method of manufacturing a secondary battery according to embodiments.

Referring to FIGS. 8 and 9, in P110, a carrier PC and a liner LN may be coupled to a fire-resistant stack FRS. The carrier PC may have relatively high rigidity and thickness. Accordingly, the fire-resistant stack FRS may be easily handled by the combination of the carrier PC and the fire-resistant stack FRS.

The fire-resistant stack FRS may include the first to third layers L1, L2, and L3 of FIG. 7.

The carrier PC may include, for example, polyethylene terephthalate (PET) but is not limited thereto. A thickness of the carrier PC may be greater than a thickness of the fire-resistant stack FRS. The thickness of the carrier PC may be in a range of about 100 µm to about 200 µm.

The liner LN may cover one surface of the fire-resistant stack FRS. The liner LN may prevent contaminants from adhering to the first layer L1 of the fire-resistant stack FRS. The liner LN may be attached to and separated from the first layer L1 without causing damage to the fire-resistant stack FRS.

Referring to FIGS. 8 to 10, in P120, the fire-resistant stack FRS may be molded to provide a fire-resistant structure 128. The carrier PC and the liner LN may be molded together with the fire-resistant stack FRS. By performing P120, the fire-resistant stack FRS may be molded in the form of a corrugated structure as shown in FIG. 6 to provide the fireproof structure 128.

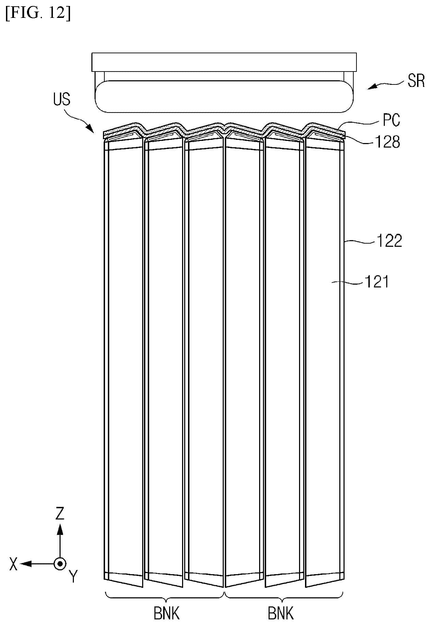

Next, referring to FIGS. 8, 10, and 11, in P130, the liner LN may be separated from the fireproof structure 128. The fireproof structure 128 to which the liner LN is attached may be transferred to a site where an assembly process of the battery cell assembly 120 (see FIG. 1) is performed, and the liner LN may be removed before the fireproof structure 128 is attached to a unit stack US as shown in FIG. 12.

Next, referring to FIGS. 8 and 12, in P140, the fireproof structure 128 may be attached to the unit stack US. The attaching of the fireproof structure 128 to the unit stack US may include pressing the fireproof structure 128 and the unit stack US by a pressing device SR such as a soft silicon roller.

Next, referring to FIGS. 8, 12, and 13, in P150, the carrier PC may be separated from the fireproof structure 128. According to embodiments, when the fireproof structure 128 is coupled to the unit stack US including two or more battery cells, the fire-resistant stack FRS having a corrugated structure (see FIG. 9) may be molded in advance to have a shape complementary to a shape of an upper part of the unit stack US and thereafter be coupled to the unit stack US, thereby improving the yield and throughput of the assembly process of the battery cell assembly.

### (Third Embodiment)

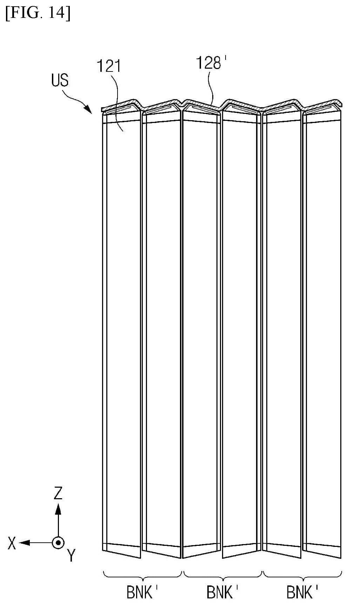

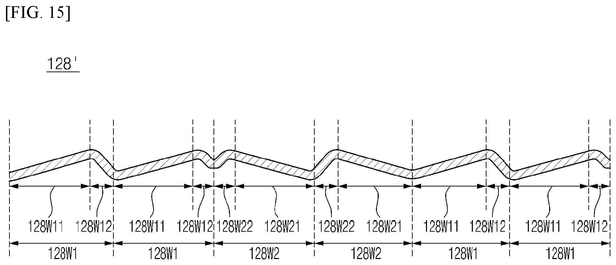

FIGS. 14 and 15 are cross-sectional views for describing a fireproof structure 128' according to other embodiments.

Referring to FIGS. 14 and 15, a unit stack US' may be different from the unit stack US of FIG. 3. More specifically, the unit stack US' may include three banks BNK', and each of the banks BNK of the unit stack US' may include two battery cells 121.

Accordingly, the fireproof structure 128' may include four first wrinkles 128W1 and two second wrinkles 128W2 due to the unit stack US' different from the unit stack US. The second wrinkles 128W2 may be interposed between the first wrinkles 128W1. That is, in the X-axis direction, two first wrinkles 128W1 may be repeated, two second wrinkles 128W2 may be repeated, and thereafter two first wrinkles 128W1 may be repeated again.

A shape of the fireproof structure 128' may vary according to an arrangement of battery cells 121 covered by the fireproof structure 128'. In addition, the arrangement of battery cells 121may vary according to a target electrical output (i.e., a target voltage and a target current) of the battery cells 121. Based on the description herein, those of ordinary skill in the art will be able to easily derive embodiments in which a unit stack includes an arbitrary number of banks and each of the banks includes an arbitrary number of battery cells.

### (Fourth Embodiment)

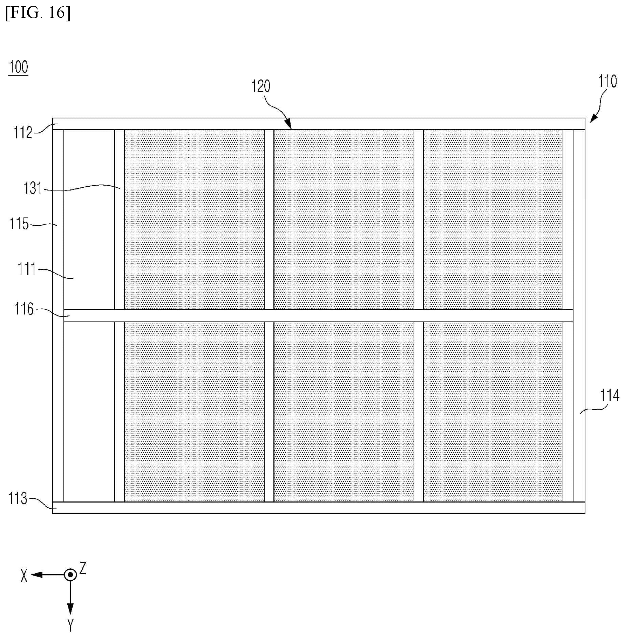

FIG. 16 is a plan view of a battery pack 100 according to embodiments.

Referring to FIGS. 1 to 3 and 16, the battery pack 100 may include a pack housing 110, a plurality of battery cell assemblies 120, and cross-beams 131. The battery pack 100 may be a final product to be mounted in an application such as a vehicle.

The pack housing 110 may provide a space for mounting the battery cell assemblies 120 therein. The pack housing 110 may include a base plate 111, side walls 112, 113, 114, and 115, and a center beam 116.

Here, two directions substantially parallel to a mounting surface (i.e., a surface facing the battery cell assembly 120) of the base plate 111 are defined as the X-axis direction and the Y-axis direction, and a direction substantially perpendicular to the mounting surface of the base plate 111 is defined as the Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

The center beam 116 and the cross-beams 131 may isolate the plurality of battery cell assemblies 120 from each other. The plurality of battery cell assemblies 120 may be spaced apart from each other in the Y-axis direction with the center beam 116 interposed therebetween. The center beam 116 may be interposed between the plurality of battery cell assemblies 120. The plurality of battery cell assemblies 120 may be spaced apart from each other in the X-axis direction with the cross-beams 131 interposed therebetween. The cross-beams 131 may be interposed between the plurality of battery cell assemblies 120.

In FIG. 16, the plurality of battery cell assemblies 120 may be arranged in a 3x2 array. The arrangement of the plurality of battery cell assemblies 120 of FIG. 16 is a non-limiting example and should not be understood as limiting the technical idea of the present disclosure in any sense. Those of ordinary skill in the art will be able to easily derive the plurality of battery cell assemblies 120 arranged in an M×N array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

According to embodiments, with respect to each of the plurality of battery cells 121 of each of the plurality of battery cell assemblies 120, the fireproof structure 128 may be spaced apart from the base plate 111 with a cell case 121C interposed therebetween. According to embodiments, the fireproof structure 128 may be at a higher level than the cell case 121C with respect to the base plate 111. That is, the fireproof structure 128 may cover an upper part of the cell case 121C. Accordingly, in the thermal runaway event, even when a high-temperature gas and flame are discharged through an exhaust path between the lid and the plurality of battery cell assemblies 120, the battery cells 121 may be protected due to the fireproof structure 128, and the safety of the battery pack 100 may improve.

The battery pack 100 may further include a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of inter-bus bars configured to electrically connect the plurality of battery cell assemblies 120. The plurality of battery cell assemblies 120 may be connected in series by the plurality of inter-bus bars. Accordingly, the battery pack 100 may be configured to output a high voltage to an external load (e.g., a motor of a vehicle).

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly, comprising:
a plurality of battery cells; and
a fireproof structure on the plurality of battery cells,
wherein the fireproof structure is in contact with each of the plurality of battery cells and has a corrugated structure.

2. The battery cell assembly of claim 1, wherein the corrugated structure includes a first wrinkle and a second wrinkle that are arranged in a first direction, and
the first wrinkle and the second wrinkle are different from each other in shape.

3. The battery cell assembly of claim 2, wherein the first wrinkle includes a first slope inclined in the first direction and a second slope inclined in the first direction, and
the second wrinkle includes a third slope inclined in the first direction and a fourth slope inclined in the first direction.

4. The battery cell assembly of claim 3, wherein a first gradient of the first slope is different from a second gradient of the second slope.

5. The battery cell assembly of claim 4, wherein the first gradient is less than the second gradient.

6. The battery cell assembly of claim 3, wherein a third gradient of the third slope is different from a fourth gradient of the fourth slope.

7. The battery cell assembly of claim 6, wherein the third gradient is less than the fourth gradient.

8. The battery cell assembly of claim 6, wherein the third gradient is equal to a first gradient of the first slope.

9. The battery cell assembly of claim 6, wherein the fourth gradient is equal to a second gradient of the second slope.

10. The battery cell assembly of claim 1, wherein the fireproof structure includes multiple layers.

11. The battery cell assembly of claim 1, wherein the fireproof structure includes first to third layers,
wherein the first layer is a fire-resistant adhesive tape, the second layer includes a fire-resistant sheet, and the third layer includes a fire-resistant coating.

12. The battery cell assembly of claim 11, wherein the second layer includes one of propylene oxide (PO), polyurethane (PU), aramid film, non-combustible glass (NCG) fiber sheet, and modified polyphenylene oxide (mPPO).

13. The battery cell assembly of claim 11, wherein the third layer includes ceramic.

14. The battery cell assembly of claim 11, wherein a thickness of the third layer is greater than a thickness of the first layer.

15. The battery cell assembly of claim 11, wherein a thickness of the third layer is greater than a thickness of the second layer.

16. The battery cell assembly of claim 11, wherein a thickness of the third layer is 25 µm or more, and
the thickness of the third layer is 30 µm or less.

17. The battery cell assembly of claim 11, wherein the sum of thicknesses of the first to third layers is 40 µm or more, and
the sum of thicknesses of the first to third layers is 50 µm or less.
